(19) **Europäisches Patentamt**
**European Patent Office**
**Office européen des brevets**

(11) **EP 2 581 984 B1**

(12) **EUROPÄISCHE PATENTSCHRIFT**

(45) Veröffentlichungstag und Bekanntmachung des Hinweises auf die Patenterteilung:
**14.11.2018 Patentblatt 2018/46**

(21) Anmeldenummer: **12006295.5**

(22) Anmeldetag: **06.09.2012**

(51) Int Cl.:
*H01Q 1/38* (2006.01)       *H01Q 7/00* (2006.01)
*H01Q 1/22* (2006.01)       *H04B 5/00* (2006.01)
*H04B 17/12* (2015.01)

(54) **Verfahren zum Prüfen einer Antennenspule**

Method for testing an antenna coil

Procédé de contrôle d'une bobine-antenne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2011 DE 102011112902**

(43) Veröffentlichungstag der Anmeldung:
**17.04.2013 Patentblatt 2013/16**

(73) Patentinhaber: **Giesecke+Devrient Mobile Security GmbH**
**81677 München (DE)**

(72) Erfinder:
• **Baldischweiler, Michael**
**81825 München (DE)**
• **Finkenzeller, Klaus**
**85774 Unterföhring (DE)**

(56) Entgegenhaltungen:
WO-A2-02/088762       DE-A1-102009 011 821
DE-A1-102011 004 674       DE-T2- 69 801 800

## Beschreibung

Die vorliegende Erfindung betrifft ein Verfahren zum Prüfen der Funktionsfähigkeit einer Antennenspule für einen portablen Datenträger.

Portable Datenträger, wie beispielsweise ein Personalausweis, ein Reisepass, eine Kreditkarte, ein Label zur Warensicherung oder dergleichen, können mit einer Antennenspule zur kontaktlosen Datenkommunikation mit einem Lesegerät ausgestattet sein. Die Antennenspule ist dazu in der Regel mit einem integrierten Schaltkreis des Datenträgers, insbesondere einem Chip, verbunden und auf einer Träger- oder Inlayschicht, beispielsweise aus einem Kunststoffmaterial wie PC oder PVC, eines Datenträgerkörpers des Datenträgers aufgebracht, beispielsweise aufgedruckt.

Um die Funktionsfähigkeit einer Antennenspule während oder nach der Herstellung des entsprechenden Datenträgers zu prüfen, sind verschiedene Verfahren bekannt. Bei einer solchen Prüfung wird im Wesentlichen geprüft, ob die Antennenspule einen Bruch aufweist und/oder ob zwei oder mehr Spulenwindungen der Antenne versehentlich kurzgeschlossen sind. Mängel dieser Art beeinträchtigen die Funktionsfähigkeit der Antennenspule erheblich bzw. zerstören diese vollständig.

Produktionsbegleitend erfolgt zumeist eine Prüfung der Antennenspule in Form einer Gleichstrom-Widerstandsmessung. Um eine solche ohmsche Messung korrekt und mit der erforderlichen Genauigkeit durchzuführen, ist in der Regel eine 4-Punkt-Messung erforderlich. Liegen die gemessenen Werte außerhalb eines vorgegebenen Intervalls, so kann dies auf einen Leiterbahnbruch oder einen Kurzschluss hindeuten. Mit einem solchen Verfahren kann allerdings lediglich der ohmsche Anteil der Antennenspule bestimmt werden. Eine frequenzabhängige Impedanz der Spule, bestehend aus der Induktivität der Spule, dem ohmschen Anteil sowie einem kapazitiven Anteil, welcher auch von einem Trägermaterial herrühren kann, kann auf diese Weise nicht bestimmt werden. Weiterhin ist dieses Prüfverfahren aufwendig, da eine Kontaktierung der Antennenspule erforderlich ist. Wird die Antennenspule mittels eines Druckprozesses hergestellt, beispielsweise mittels Silberleitpaste aufgedruckt, so kann es zudem vorkommen, dass die Paste bei der Widerstandsmessung noch nicht vollständig ausgehärtet ist und entsprechende Kontaktstifte, welche zur Kontaktierung verwendet werden, verunreinigt werden und anschließend gereinigt oder ausgetauscht werden müssen.

Alternativ können die Resonanzfrequenz der Antennenspule und deren Güte kontaktlos bestimmt werden. Dazu wird in der Regel ein Phasen- und Impedanz-Analysator verwendet. Ein solches, sehr aufwendiges Verfahren ist detailliert beispielsweise im "RFID-Handbuch" von Klaus Finkenzeller, 5. Auflage, Carl Hanser Verlag, München, 2008, in Kapitel 4.1.11.2, beschrieben. Liegt die gemessene Resonanzfrequenz in einem vorgegebenen Bereich, so ist die Antennenspule funktionsfähig. Diese Art der Prüfung ist aussagekräftiger als eine rein ohmsche Messung, allerdings ungleich aufwendiger und am besten manuell durchzuführen. Die Zeitdauer einer solchen Prüfung liegt im Bereich von mehreren Sekunden. Daher wird diese Prüfung in der Regel nicht produktionsbegleitend durchgeführt, sondern lediglich an einigen Stichproben und für die Produktionsfreigabe.

Bevorzugt wird die Antennenspule geprüft, bevor der Schaltkreis im weiteren Produktionsprozess mit der Antennenspule gekoppelt wird, um eine fehlerhafte Antennenspule bereits zu einem frühen Produktionszeitpunkt identifizieren zu können. Damit kann vermieden werden, dass fertig hergestellte Datenträger mit Schaltkreis allein wegen einer fehlerhaften Antennenspule aussortiert werden müssen.

Liegt ein Fehler, insbesondere ein Leiterbahnbruch, einer solchen Antennenspule ohne angeschlossenen integrierten Schaltkreis allerdings nahe einem der Enden der Antennenspule vor, wobei diese Enden in der Regel als Anschlusskontakte für Komponenten des anzuschließenden Schaltkreises dienen, so ist die Aussagekraft der beschriebenen, kontaktlosen Prüfungen der entsprechenden Antennenspule eingeschränkt. Dies gilt, da das Ergebnis der Prüfung in der Regel die genannten Parameter des restlichen, größeren Anteils der Antennenspule abbildet. Diese gemessenen Parameter entsprechen dann aber annähernd denen der gesamten, intakten Antennenspule. Somit kann ein Fehler nahe einem Ende der offenen Antennenspule mit den beschriebenen Verfahren nicht oder nur unzureichend erkannt werden.

Aus der DE 10 2011 004674 A1 ist eine Klebefolie mit einem elektromagnetischen Schwingkreis bekannt, der auf RFID-Transpondern angebracht werden kann und diese deaktiviert. Hierzu wird die Energie des Lesegeräts von dem Schwingkreis aufgenommen, so dass der passive Transponder nicht mehr mit ausreichend Energie versorgt wird um seinerseits mit dem Lesegerät kommunizieren zu können.

Aufgabe der vorliegenden Erfindung ist es demnach, ein Verfahren zur zuverlässigen Funktionsprüfung einer Antennenspule ohne angeschlossenen integrierten Schaltkreis vorzuschlagen. Wünschenswerterweise ist diese Prüfung weiterhin schnell, einfach durchzuführen und kostengünstig.

Diese Aufgabe wird durch ein Verfahren mit den Merkmalen des unabhängigen Anspruchs 1 gelöst. Vorteilhafte Ausgestaltungen und Weiterbildungen der Erfindung sind in den abhängigen Ansprüchen angegeben.

Die Erfindung basiert auf dem Grundgedanken, eine Antennenspule ohne angeschlossenen integrierten Schaltkreis, welche in der Regel als offene Antennenspule vorliegt, vor einem kontaktlosen Prüfen auf deren Funktionsfähigkeit mittels einer kontaktierenden Kurzschlussbrücke zu schließen und anschließend die geschlossene Antennenspule zu prüfen. Auf diese Weise können, wie nachstehend detailliert erläutert, zuverlässig Fehler der Antennenspule erkannt werden, insbesondere auch solche, welche sehr nahe an den Enden einer vormals offenen Antennenspule vorliegen.

Demnach umfasst ein erfindungsgemäßes Verfahren zum Prüfen der Funktionsfähigkeit einer Antennenspule für einen kontaktlos kommunizierenden portablen Datenträger folgende Schritte:

In einem ersten Schritt wird die Funktionsfähigkeit einer geschlossenen Antennenspule kontaktlos geprüft. Falls die zu prüfende Antennenspule ursprünglich als offene Antennenspule vorliegt, wird die Antennenspule in geeigneter, nachstehend detailliert beschriebener Weise vor dem Schritt des Prüfens kurzgeschlossen. Es ist aber auch möglich, dass die Antennenspule bereits bei der Herstellung als geschlossene Spule hergestellt, beispielsweise gedruckt, wird. Dabei kann ein Bereich zum späteren Unterbrechen der geschlossenen Spule vorgesehen werden, in welchen dann beispielsweise ein integrierter Schaltkreis eingesetzt und an die dann offene Antennenspule angeschlossen werden kann.

Der Schritt des Prüfens selbst kann dann mit einem bekannten, beispielsweise in der Beschreibungseinleitung erläuterten kontaktlosen Prüfverfahren durchgeführt werden, also etwa durch eine Messung der Impedanz der Antennenspule, eine Bestimmung der Resonanzfrequenz oder der Güte der Antennenspule.

Wie bereits angedeutet, ermöglicht es das erfindungsgemäße Verfahren auf einfache Weise, Fehler, insbesondere Leitungsbrüche, in einer Antennenspule zu erkennen, insbesondere solche Fehler, welche sehr nahe an den Kontaktierungsenden einer Antennenspule auftreten. Wird nämlich eine offene Antennenspule mit einem herkömmlichen kontaktlosen Prüfverfahren geprüft, so erkennt ein solches Verfahren die beschriebenen Fehler prinzipbedingt nicht oder kaum, da die physikalischen Eigenschaften eines Leiterbahnteils einer derart fehlerhaften, offenen Antennenspule, wenn der Leiterbahnteil nur groß genug ist, kaum von den physikalischen Eigenschaften einer intakten Spule zu unterscheiden sind, da sich die entsprechenden Leitungslängen nicht ausreichend voneinander unterscheiden.

Die erfindungsgemäße Vorgehensweise eines absichtlichen Kurzschließens der Antennenspule zur Bildung einer geschlossenen Antennenspule, macht es nun auf einfache Weise möglich, auch einen solchen Fehler zuverlässig zu erkennen.

Lag in der ursprünglichen (offenen) Antennenspule ohne Chip ein Leiterbahnbruch vor, egal an welcher Stelle, d.h. auch nahe an einem der Kontaktierungsenden der Antennenspule, so ist die nun veränderte, d.h. durch Überbrückung der Kontaktierungsenden kurzgeschlossene Spule, immer noch offen. Sie ist klar von einer intakten Spule, welche nun aufgrund der Überbrückung geschlossen sein sollte, zu unterscheiden. Jedes der genannten Prüfverfahren kann zuverlässig eine offene Antennenspule von einer geschlossenen Antennenspule unterscheiden.

Dabei ist es, wie erwähnt, möglich, auch solche Antennenspulen, für welche das spätere Verbinden mit einem integrierten Schaltkreis vorgesehen ist, welche somit als offene Antennenspulen hergestellt werden müssten, zunächst als geschlossene Antennenspule herzustellen. Der Schritt des Überbrückens wird somit vorweggenommen. Dazu kann beispielsweise ein später zu entfernender Bereich einer Leiterbahn der Antennenspule, welcher dann zum Einsetzen des integrierten Schaltkreises dient, bei der Herstellung der Antennenspule zunächst kurzgeschlossen werden.

Nachfolgend wird ein neues, bevorzugtes Prüfverfahren beschrieben, welches schnell, einfach und kostengünstig durchgeführt werden kann und welches zahlreiche Vorteile gegenüber den bekannten Verfahren besitzt. Der Grundgedanke dieses neuen Prüfverfahrens besteht darin, die zu prüfende Antennenspule zur Schwingung anzuregen und die durch die Anregung erzeugte freie, gedämpfte Schwingung der Antennenspule zu erfassen und auszuwerten, um eventuelle Mängel der Antennenspule zu erkennen. Demnach umfasst dieses neue kontaktlose Prüfverfahren folgende Teilschritte:

In einen ersten Teilschritt wird die Antennenspule zur Schwingung angeregt. Dies geschieht vorzugsweise induktiv durch ein gepulstes Magnetfeld, welches z.B. in einfacher Weise durch einen einzelnen (Gleich-)Strompuls erzeugt werden kann. Vorzugsweise besteht die Anregung aus einem einzelnen Magnetfeldpuls. Der Gleichstrompuls kann dabei als Dirac-Stoß erzeugt werden. Es ist auch möglich, dass das Magnetfeld durch einen (Gleich-) Strompuls erzeugt wird, welcher - anders als ein Dirac-Stoß - lediglich eine steile Flanke aufweist. Bevorzugt erfolgt das Anregen der Antennenspule kontaktlos über eine Erregerspule, welche dazu mit einem entsprechenden Impulsgeber gekoppelt ist.

In einem zweiten Teilschritt des kontaktlosen Prüfverfahrens wird die freie, gedämpfte Schwingung der Antennenspule, welche in Antwort auf die Anregung erzeugt wird, erfasst. Dies geschieht vorzugsweise ebenfalls kontaktlos mittels einer Messantenne. Erregerspule und Messantenne werden dazu vorzugsweise in unmittelbarer Nähe der zu prüfenden Antennenspule angeordnet.

In einem dritten Teilschritt wird die erfasste freie, gedämpfte Schwingung der Antennenspule ausgewertet. Dies kann mittels einer geeigneten Auswertungseinrichtung geschehen, welche mit der Messantenne verbunden ist.

Eine erfindungsgemäße Prüfvorrichtung zum Prüfen der Funktionsfähigkeit der Antennenspule für einen kontaktlos kommunizierenden portablen Datenträger umfasst dazu einen Impulsgeber. Dieser ist eingerichtet, die Antennenspule über eine an den Impulsgeber angeschlossene Erregerspule kontaktlos anzuregen. Weiter umfasst die Prüfvorrichtung eine Messantenne, welche eingerichtet ist, eine freie, gedämpfte Schwingung der Antennenspule kontaktlos zu erfassen. Eine Auswertungseinrichtung der Prüfvorrichtung schließlich, welche mit der Messantenne verbunden ist, ist eingerichtet, die von der Messantenne erfasste freie, gedämpfte Schwingung auszuwerten.

Die Auswertungseinrichtung kann dabei insbesondere einen Vergleich mit Referenzwerten einer intakten Antennenspule heranziehen. Zur Analyse der von der Messantenne beim Erfassen der freien, gedämpften Schwingung erfassten Signale kann in bekannter Weise beispielsweise ein digitaler Signalprozessor (DSP) oder ein Oszilloskop dienen.

Die in der beschriebenen Weise angeregte Antennenspule schwingt nach der Anregung unmittelbar mit einer freien, gedämpften Schwingung A(t) aus, welche mit der folgenden Formel beschrieben werden kann:

$$A(t) = A_0(t)\, e^{(-\delta t)} \cos \omega t.$$

A(t) kann dabei dem Strom I oder der Spannung U eines durch die Antennenspule gebildeten elektrischen Schwingkreises entsprechen. Demnach kann der Spannungsverlauf der Antennenspule unmittelbar nach der Anregung mit der folgenden Formel beschrieben werden:

$$U(t) = U_0(t)\, e^{(-\delta t)} \cos \omega t$$

Die Kreisfrequenz $\omega$ entspricht dabei der Eigenresonanzfrequenz der Antennenspule. Aus dem Abklingkoeffizienten $\delta$ kann die Güte der Antennenspule ermittelt werden. Je länger der Abklingvorgang dauert, desto höher ist die Güte des entsprechenden Schwingkreises. D.h. eine Auswertung der freien gedämpften Schwingung der Antennenspule, d. h. deren Ausschwingen unmittelbar nach der Anregung, erlaubt es, sowohl die Eigenresonanzfrequenz als auch die Güte der Antennenspule zu bestimmen.

Die Anwendbarkeit des kontaktlosen Prüfverfahrens beruht nun auf dem Umstand, dass ein Defekt der zu prüfenden Antennenspule, wie beispielsweise eine Unterbrechung einer Leiterbahn oder ein Kurzschluss zwischen einzelnen Spulenwindungen der Antennenspule, dazu führt, dass sich ein bei einer beschriebenen Prüfung erkennbarer Signalverlauf des Ausschwingens signifikant von einem entsprechenden Signalverlauf des Ausschwingens einer intakten Antennenspule unterscheidet. Anhand der ausgewerteten freien, gedämpften Schwingung festgestellte Parameter einer fehlerhaften Spule, insbesondere deren Eigenresonanzfrequenz und deren Güte, unterscheiden sich deutlich von den entsprechenden Parametern einer intakten Antennenspule.

Ein Leiterbahnbruch beispielsweise zeigt sich in einem deutlich erkennbar veränderten Ausschwingverhalten, insbesondere einer veränderten, in der Regel erhöhten Eigenresonanzfrequenz. Im Falle eines Kurzschlusses von zwei oder mehr Spulenwindungen ist kaum mehr ein Ausschwingen zu beobachten.

Auf diese Weise kann beim Auswerten der freien, gedämpften Schwingung durch die Prüfvorrichtung nicht nur erkannt werden, ob die Antennenspule fehlerhaft ist oder nicht, sondern es kann im Falle eines Fehlers oder Mangels auch der Typ des Fehlers bzw. die Art des Mangels festgestellt werden.

Die Vorteile des kontaktlosen Prüfverfahrens sind offensichtlich und zahlreich. Die Prüfung der Antennenspule kann kontaktlos, mit sehr geringem Zeitaufwand und somit insbesondere während eines laufenden Produktionsprozesses durchgeführt werden. Insbesondere kann auch bereits eine gedruckte Antennenspule, welche noch nicht vollständig ausgehärtet ist, mit dem erfindungsgemäßen Verfahren geprüft werden. Die benötigte Prüfvorrichtung ist vergleichsweise einfach und kostengünstig bereitzustellen. Zudem erlaubt das Verfahren nicht nur, Fehler oder Mängel einer defekten Antennenspule zu erkennen, sondern auch verschiedene Fehlertypen zu unterscheiden. Das Verfahren erlaubt überdies bei unverändertem Aufbau sowohl ein Prüfen von unbestückten Antennenspulen, also solchen, welche noch nicht mit einem integrierten Schaltkreis verbunden sind, als auch von Antennenspulen mit angeschlossenem Schaltkreis, wie beispielsweise bereits fertiggestellten Transpondern oder kontaktlos kommunizierenden Chipkarten. Schließlich kann das Verfahren parallel für eine Mehrzahl von Antennen, welche beispielsweise nebeneinander auf einem Fertigungsbogen angeordnet sind, durchgeführt werden, ohne dass eine Abschirmung einzelner Antennen notwendig ist. Insgesamt können Antennenspulen mittels dieses Verfahrens somit schnell, auf einfache Weise und kostengünstig hinsichtlich ihrer Funktionsfähigkeit geprüft werden.

Vorzugsweise werden die Erregerspule und die Messantenne zum Prüfen der Antennenspule bzw. in der Prüfvorrichtung "orthogonal" zueinander angeordnet. In dem Fall, dass die Erregerspule und die Messantenne nicht orthogonal zueinander, sondern beispielsweise nebeneinander angeordnet sind, wird der Erregungsimpuls der Erregerspule auch von der Messantenne erfasst. Zudem überlagert dann das Abschwingverhalten der Erregerspule das zu messende Abschwingverhalten der Antennenspule.

Bei einer "orthogonalen" Anordnung der Erregerspule zu der Messantenne liegen diese derart zueinander, dass das Signal der Erregerspule von der Messantenne nicht wahrgenommen wird. Die Erregerspule ist dabei gegenüber der Messantenne räumlich so angeordnet, dass in der Messantenne im Wesentlichen kein Signal eingekoppelt wird. Ein Signal wird in eine Spule immer dann eingekoppelt, wenn das Ringintegral über den magnetischen Fluss $\Phi$ durch diese Spule größer als Null ist (vgl. oben zitiertes RFID-Handbuch, Kapitel 4.1.6 und 4.1.9.2). Das Integral über den magnetischen Fluss $\Phi$ ist genau dann Null, wenn sich magnetische Feldlinien unterschiedlicher Richtung und Feldstärke in der Messantenne über die Gesamtfläche gegenseitig aufheben, oder wenn der Winkel der Feldlinien zur Spulenachse genau 90° beträgt - daher der Begriff "orthogonale" Anordnung. Eine geeignete, nachstehend genauer beschriebene, so genannte koplanare orthogonale Anordnung der Erregerspule zur Messantenne kann beispielsweise derart erfolgen, dass die beiden Antennen in einer Ebene geeignet teilweise übereinander liegen.

Wie bereits erwähnt, kann die zu prüfende Antennenspule im Rahmen des erfindungsgemäßen Prüfverfahrens zunächst geschlossen vorliegen. Die im Schritt des Unterbrechens dann entstehenden Enden einer Leiterbahn der dann offenen Antennenspule können als Anschlusskontakte für Komponenten eines integrierten Schaltkreises, insbesondere eines Chips, dienen.

Es ist, wie ebenfalls bereits erwähnt, auch möglich, dass die zu prüfende Antennenspule zunächst als offene Antennenspule vorliegt und die Enden der offenen Antennenspule vor dem Schritt des kontaktlosen Prüfens zunächst überbrückt werden. Dies kann einerseits mittels einer diese Enden verbindenden, leitfähigen Kurzschlussbrücke geschehen, welche auf ein die Antennenspule umfassendes Trägermaterial aufgebracht, vorzugsweise aufgedruckt wird.

Andererseits können die Enden der offenen Antennenspule auch temporär mittels einer externen Überbrückungsvorrichtung, vorzugsweise in Form einer nachstehend detailliert beschriebenen Walze, überbrückt werden. Diese Art des Überbrückens wird bevorzugt dann angewendet, wenn der Abstand der zu überbrückenden Enden einer offenen Antennenspule so gering ist, dass ein nachfolgendes Entfernen der Überbrückung zum Unterbrechen einer Leiterbahn der Antennenspule an gleicher Stelle fertigungstechnisch aufgrund der geringen Toleranzen sehr aufwendig wäre.

Die Art, wie der Schritt des Unterbrechens einer Leiterbahn der Antennenspule nach der kontaktlosen Prüfung konkret durchgeführt wird, hängt davon ab, wie die offene Antennenspule zuvor geschlossen worden ist.

Im zuletzt beschriebenen Fall der Überbrückung mittels der Überbrückungsvorrichtung erfolgt das Unterbrechen in der Regel schlicht durch Entfernen der Überbrückungsvorrichtung. Die ohnehin nur temporär angelegte Verbindung der offenen Enden der Antennenspule kann auf diese Weise ohne Eingriff in die Struktur der Antennenspule und/oder des Trägermaterials durchgeführt werden.

In dem Fall, dass die offene Antennenspule dadurch geschlossen worden ist, dass eine elektrisch leitfähige Kurzschlussbrücke auf dem Trägermaterial angeordnet worden ist, erfolgt das Unterbrechen der Leiterbahn der nun geprüften, geschlossenen Antennenspule durch Entfernen eines Teils der geschlossenen Leiterbahn, vorzugsweise in dem Bereich, in dem zuvor die Kurzschlussbrücke angeordnet worden ist. Dies kann auf verschiedene Arten geschehen, beispielsweise durch Ausstanzen eines entsprechenden Bereichs in der Trägerschicht, welcher danach beispielsweise zum Einsetzen des integrierten Schaltkreises dienen kann. Ein Teil der Leiterbahn kann aber auch mittels Laser, durch mechanisches "Abkratzen" oder auf andere, geeignete Weise entfernt werden.

Gemäß einer bevorzugten Ausführungsform des erfindungsgemäßen Verfahrens wird der Schritt des kontaktlosen Prüfens der Antennenspule hinsichtlich ihrer Funktionsfähigkeit nach dem Schritt des Unterbrechens der geschlossenen Antennenspule nochmals durchgeführt. Dies kann erneut mit einer der vorstehend beschriebenen kontaktlosen Prüfverfahren geschehen. Bevorzugt wird auch in diesem Schritt das im Rahmen dieser Erfindung neu vorgestellte, vorstehend detailliert beschriebene Prüfverfahren, welches auf einer Auswertung des Abschwingverhaltens der geprüften Antennenspule basiert, verwendet.

Eine erneute Prüfung der Antennenspule, die, falls sie intakt ist, nun in offener Form vorliegt, erlaubt es zuverlässig, auch einen zweiten, gängigen Fehlertyp, einen Kurzschluss zwischen einzelnen Spulenwindungen der Antennenspule, zu erkennen. Dieser Fehler könnte zumindest in einzelnen Fällen beim ersten kontaktlosen Prüfen der Antennenspule, vor dem Unterbrechen der geschlossenen Leiterbahn, nicht mit der gewünschten Zuverlässigkeit erkannt worden sein. Der erfindungsgemäß hergestellte Kurzschluss und ein bereits in derselben Spule vorliegender Kurzschluss sind mit keinem der beschriebenen Verfahren auf einfache Weise zu unterscheiden.

Eine erfindungsgemäße Überbrückungsvorrichtung zum temporären Überbrücken der Enden einer auf einem Trägermaterial angeordneten, offenen Antennenspule für einen kontaktlos kommunizierenden portablen Datenträger zeichnet sich dadurch aus, dass die Überbrückungsvorrichtung als zumindest bereichsweise elektrisch leitfähige Andruckwalze ausgebildet ist. Diese Walze ist in der Regel als ein Teil eines Fördersystems einer Vorrichtung zur Herstellung der Antennenspule ausgebildet und ist eingerichtet, die Enden der offenen Antennenspule derart zu überbrücken, dass eine geschlossene Leiterbahn entsteht, wenn das Trägermaterial unter der Andruckwalze hindurch gefördert wird.

Vorzugsweise wird der Radius der Andruckwalze derart gewählt, dass eine Auflagefläche der Andruckwalze auf dem Trägermaterial die Enden der offenen Antennenspule gleichzeitig kontaktiert, wenn das Trägermaterial unter der Andruckwalze hindurch gefördert wird.

Gemäß einer bevorzugten Ausführungsform besteht die Andruckwalze zu großen Teilen aus einen elektrisch nicht leitfähigen Material, beispielsweise Kunststoff. Lediglich in einem begrenzten Bereich, in welchem die Enden der offenen Antennenspule unter der Walze hindurch gefördert werden, ist ein elektrisch leitfähiger Abschnitt, vorzugsweise lediglich auf einer Oberfläche der Walze, vorgesehen, beispielsweise in Form einer Metallfolie.

Um die Bildung von Wirbelströmen zu verhindern, welche die Ergebnisse eines vorstehend beschriebenen Prüfverfahrens beeinträchtigen können, ist gemäß einer bevorzugten Ausführungsform die Andruckwalze derart ausgebildet, dass der elektrisch leitfähige Abschnitt der Andruckwalze koaxial an der Oberfläche der Andruckwalze verlaufende leitfähige Segmente aufweist, welche jeweils von nicht leitfähigen Segmenten voneinander getrennt sind. Die leitfähigen Segmente können dabei beispielsweise in Form von Metallfolienstreifen auf der Walze angeordnet werden. Es versteht sich, dass die Breite der elektrisch leitfähigen Streifen dabei vorzugsweise so gewählt wird, dass, wenn ein Bogen mit dem die Antennenspulen tragenden Trägermaterial unter der Walze hindurchgefördert wird, jeweils mindestens ein solcher Streifen auf dem Trägermaterial derart zu liegen kommt, dass die Enden der offenen Antennenspule verbunden werden, d.h. dass temporär eine geschlossene Antennenspule entsteht.

Die Erfindung wird nachfolgend mit Bezug auf die beiliegenden Zeichnungen beispielhaft beschrieben. Darin zeigen:

Figuren 1, 2 — jeweils eine zu prüfende Antennenspule auf einer Trägerschicht;

Figuren 3, 4 — kritische Bereiche der Antennenspulen aus den Fig. 1 und 2 hinsichtlich der Erkennbarkeit von Fertigungsfehlern der entsprechenden Antennenspulen;

Figuren 5, 6 — zu überbrückende Abschnitte der offenen Antennenspulen aus den Fig. 1 und 2 zum Bilden einer jeweils geschlossenen Antennenspule;

Figur 7 — eine Andruckwalze zum Überbrücken einer offenen Antennenspule aus Fig. 2 in Seitenansicht;

Figur 8 — die Andruckwalze aus Fig. 7 in Draufsicht auf eine zu prüfenden Antennenspule mit Prüfvorrichtung;

Figur 9 — eine erste Ausführungsform der Andruckwalze aus Fig. 7 in perspektivischer Ansicht und in Draufsicht zusammen mit einer zu prüfenden Antennenspule;

Figur 10 — eine zweite Ausführungsform der Andruckwalze aus Fig. 7 in perspektivischer Ansicht und einen Abschnitt daraus in Draufsicht;

Figur 11 — den Verlauf einer freien, gedämpften Schwingung;

Figur 12 — Komponenten einer bevorzugten Ausführungsform einer erfindungsgemäßen Prüfvorrichtung;

Figur 13 — einen Signalverlauf eines Erregerimpulses eines Impulsgebers;

Figur 14 — einen Verlauf des Signals des Erregerimpulses mit an den Impulsgeber angeschlossener Erregerspule;

Figur 15 — einen Signalverlauf einer freien, gedämpften Schwingung einer intakten Antennenspule, wenn diese mit einem Impuls gemäß Fig. 13 angeregt worden ist;

Figur 16 — eine Vorgehensweise zur Ermittlung der Eigenresonanz der Antennenspule aus Fig. 15 anhand einer Auswertung der freien, gedämpften Schwingung;

Figur 17 — einen Signalverlauf einer freien gedämpften Schwingung einer Antennenspule mit einem Leiterbahnbruch;

Figur 18 — einen Signalverlauf einer freien gedämpften Schwingung einer Antennenspule mit kurzgeschlossenen Spulenwindungen;

Figur 19 — einen Signalverlauf einer freien, gedämpften Schwingung einer intakten, zweilagigen Antennenspule;

Figur 20 — einen Signalverlauf einer freien, gedämpften Schwingung einer intakten, einlagigen Antennenspule;

Figur 21 — einen Signalverlauf einer freien, gedämpften Schwingung einer geschlossenen, intakten Antennenspule ohne angeschlossenen integrierten Schaltkreis; und

Figur 22 — einen Signalverlauf einer freien, gedämpften Schwingung einer geschlossenen Antennenspule aus Fig. 21, nun mit einem Leiterbahnbruch;

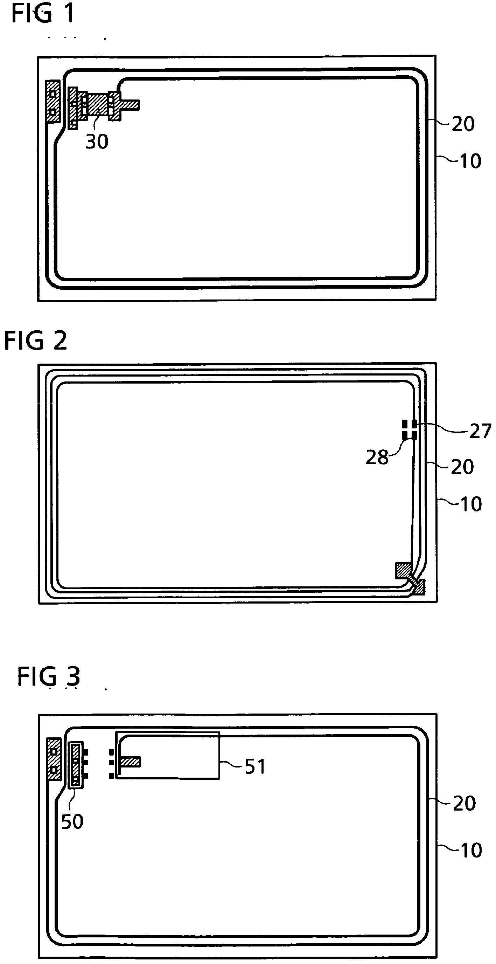

In den Figuren 1 und 2 sind zwei verschiedene Inlayschichten 10 eines portablen Datenträgers, im gezeigten Beispiel einer Chipkarte, mit darauf angeordneter Antennenspule 20 gezeigt. Die Antennenspule 20 kann dabei beidseitig aufgebracht sein, wobei zum Bilden eines Kreuzungspunktes dann eine Durchkontaktierung notwendig wird. Im Falle einer lediglich einseitig aufgebrachten Antennenspule, wie in Fig. 2 gezeigt, erfolgt eine Kreuzungsbildung mittels einer Brücke (in der Figur unten rechts). Auf der Trägerschicht 10 in Fig. 1 ist bereits ein integrierter Schaltkreis 30 mit der Antennenspule 20 verbunden worden, die Antennenspule 20 in Fig. 2 ist offen und noch unbestückt. Die Enden 27, 28 der offenen Antennenspule 20 sind als Kontaktstellen zur späteren Kontaktierung des Schaltkreises 30 vorgesehen. Je nach Antennenaufbau kann die Eigenresonanz der Antennenspule 20 unterschiedlich hoch sein, bei einer Spule mit zweilagigem Aufbau beispielsweise bei ca. 23 MHz, bei einlagigem Aufbau bei ca. 43 MHz.

Wie bereits in der Beschreibungseinleitung beschrieben, sind Fehler einer zu prüfenden Antennenspule 20, insbesondere Leiterbahnbrüche, welche sich sehr nahe an einem der Enden 27, 28 einer offenen, unbestückten Antennenspule 20 befinden, mit bekannten, kontaktlosen Prüfverfahren kaum zuverlässig zu erkennen. Dies liegt daran, dass die Länge des restlichen Leiterbahn der Spule, d.h. von der fehlerhaften Stelle bis hin zum anderen Ende der offenen Antennenspule 20, im Wesentlichen dieselbe Länge aufweist wie die gesamte Antennenspule 20, und sich gegenüber den bekannten Prüfverfahren folglich auch im Wesentlichen wie eine intakte Antennenspule 20 verhält.

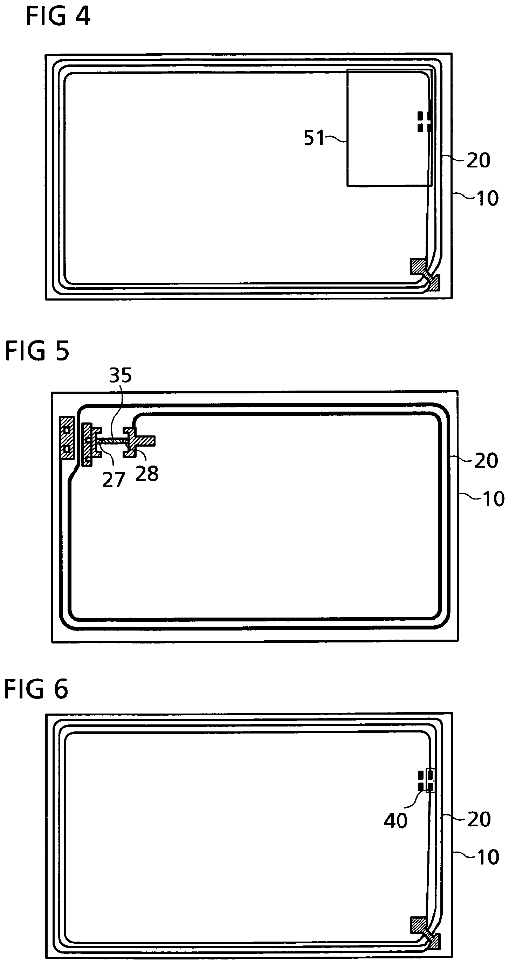

In den Fig. 3 und 4 sind die angesprochenen Bereiche nahe der offenen Enden 27, 28 der Antennenspule 20 hervorgehoben. Fehler, die in dem Bereich 50 der Antennenspule 20 in Fig. 3 auftreten, sind praktisch mit bekannten kontaktlosen Prüfverfahren nicht erkennbar. Fehler, die in den Bereichen 51 (vgl. Fig. 3 und 4) vorkommen, können allenfalls mit geringer Wahrscheinlichkeit entdeckt werden.

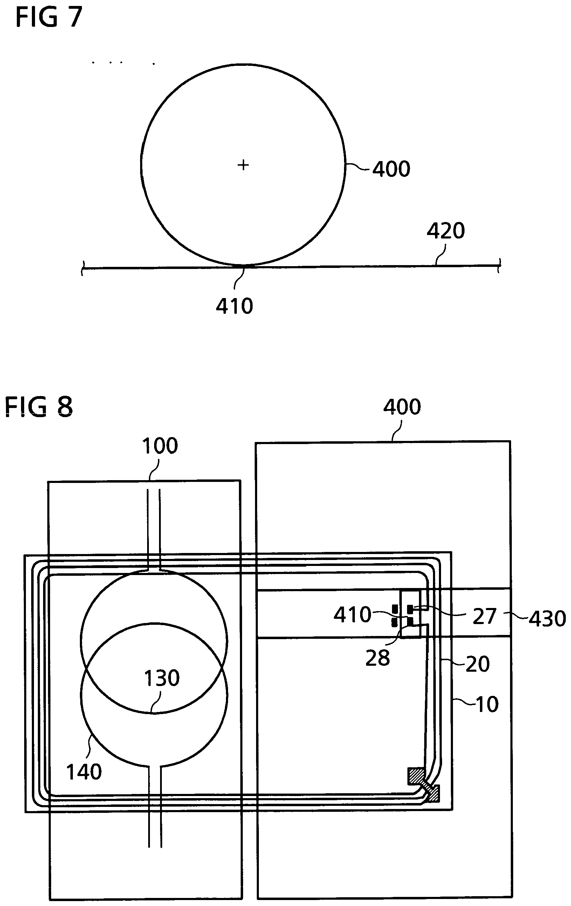

Um diesem Problem abzuhelfen, wird, wie in den Fig. 5 und 6 angedeutet, eine ursprünglich als offen vorliegende Antennenspule 20 mittels einer leitenden Kurzschlussbrücke 35 (vgl. Fig. 5) geschlossen, d.h. es wird eine geschlossenen Antennenspule 20 gebildet. Dies kann, wie mit Bezug auf Fig. 5 illustriert, dadurch geschehen, dass die Kurzschlussbrücke 35 auf das die offene Antennenspule 20 umfassende Trägermaterial 10 derart aufgebracht, vorzugsweise aufgedruckt, wird, dass die offenen Enden 27, 28 der Antennenspule 20 elektrisch leitend verbunden werden. Alternativ kann ein zu überbrückender Bereich 40, welcher in Fig. 6 gekennzeichnet ist, wie nachstehend mit Bezug auf die Fig. 7 bis 10 detailliert beschrieben, mittels einer externen Überbrückungsvorrichtung 400 temporär überbrückt werden.

Eine nun an der geschlossenen Antennenspule 20 durchgeführte kontaktlose Prüfung kann einen Fehler der Antennenspule in Form eines Leiterbahnbruchs, auch wenn dieser in einem der als problematisch beschriebenen Bereiche 50, 51 vorliegt, zuverlässig erkennen. Dies liegt daran, dass eine intakte Antennenspule nun, wie gewünscht, geschlossen ist, während eine Antennenspule, welche bereits einen Leiterbahnbruch aufweist, egal an welcher Stelle, nach dem Bilden der Überbrückung der offenen Kontaktierungsenden 27, 28, immer noch offen ist. Die Unterscheidung einer offenen von einer geschlossenen Antennenspule gelingt mit jedem der bekannten kontaktlosen Prüfverfahren zuverlässig.

In einem nachfolgenden Schritt wird die vor dem Prüfschritt in beschriebener Weise angeordnete Überbrückung 35 wieder entfernt. D.h. die Leiterbahn der geschlossenen Antennenspule wird unterbrochen. Es entsteht somit die - in der Regel ursprünglich gegebene -, offene Antennenspule 20. Dieser Schritt des Unterbrechens wird durchgeführt, bevor die Antennenspule mit Komponenten eines integrierten Schaltkreises verbunden wird. Es ist in diesem Zusammenhang auch möglich, dass die Antennenspule 20 bereits bei der Herstellung als geschlossene Antennenspule hergestellt, beispielsweise gedruckt, wird. Die Überbrückung der Enden 27, 28 wird hier bereits vorweggenommen, um das Herstellungsverfahren der Spule insgesamt zu vereinfachen. Erst nun, nach der kontaktlosen Prüfung der Antennenspule, wird die Überbrückung 35 entfernt, um die beabsichtigte, offenen Antennenspule 20 zu erhalten.

Das Unterbrechen der Leiterbahn der geschlossenen Antennenspule 20 durch Entfernen der auf dem Trägermaterial 10 aufgebrachten Überbrückung 35 kann mittels bekannter Verfahren durchgeführt werden. Beispielsweise kann im Bereich der Überbrückung eine Ausstanzung vorgenommen werden. Diese entfernt einerseits die Überbrückung 35 und lässt andererseits eine Aufnahme für einen mit der Antennenspule 20 zu kontaktierenden integrierten Schaltkreis 30 entstehen (vgl. Fig. 1). Es ist aber auch möglich, die Überbrückung wegzulasern, mechanisch "abzukratzen" oder in anderer Weise zu entfernen. Eine Überbrückung durch eine externe Überbrückungsvorrichtung 400 wird durch Wegnahme der Überbrückungsvorrichtung 400 entfernt, wodurch die temporär geschlossene Leiterbahn der Antennenspule 20 unterbrochen wird und wieder eine offene Antennenspule 20 entsteht.

In der Regel wird der Schritt des kontaktlosen Prüfens an der nun offenen Antennenspule wiederholt. Auf diese Weise können auch andere Arten von Fehlern der Antennenspule, insbesondere Kurzschlüsse zwischen einzelnen Spulenwindungen, zuverlässig erkannt werden.

In manchen Fällen, insbesondere, wenn die Enden einer offenen Antennenspule einen sehr geringen Abstand aufweisen, ist eine Überbrückung dieser offenen Enden mittels einer externen Überbrückungsvorrichtung vorzuziehen. Eine auf dem Trägermaterial aufgebrachte Überbrückung wäre wegen des geringen Abstands nur mit großem Aufwand wieder zu entfernen. Derart geringe Abstände der entsprechenden Kontaktierungsenden ergeben sich beispielsweise, wenn es vorgesehen ist, den Chip mittels der bekannten Flip-Chip-Technik mit der Antennenspule zu verbinden.

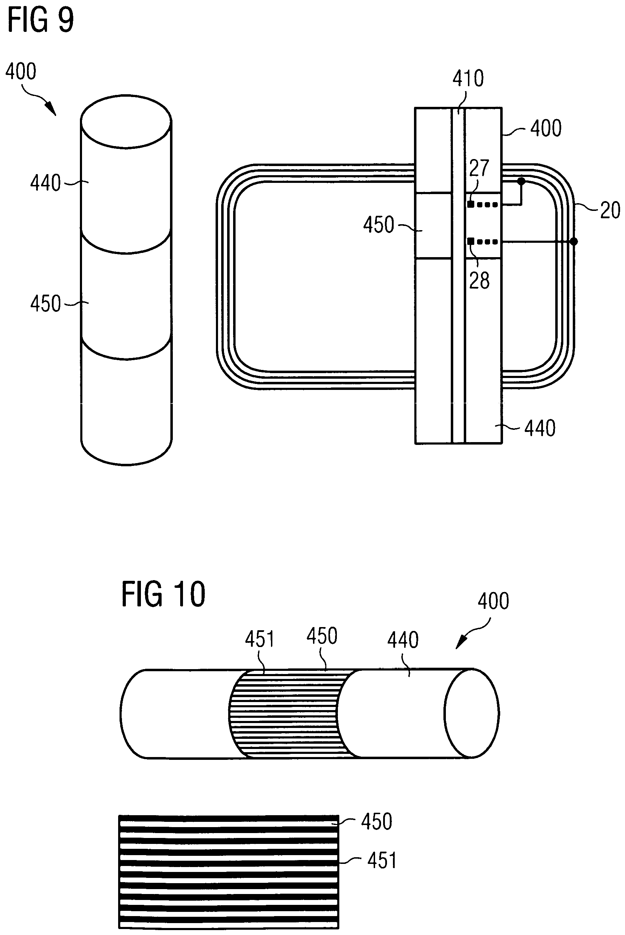

Wie in Fig. 6 angedeutet, wird ein dort mit 40 bezeichneter Bereich, wie nachfolgend beispielhaft beschrieben, mittels einer externen Überbrückungsvorrichtung überbrückt. Als Überbrückungsvorrichtung kann, wie in den Fig. 7 bis 10 illustriert, eine zumindest bereichsweise elektrisch leitfähige Andruckwalze 400 dienen. Diese ist vorzugsweise in ein Fördersystem einer Vorrichtung zur Herstellung von Antennenspulen integriert. Die Andruckwalze 400 ist eingerichtet, die Enden 27, 28 einer offenen Antennenspule 20 derart zu überbrücken, dass eine geschlossenen Leiterbahn entsteht, wenn das Trägermaterial 10 unter der Andruckwalze 400 hindurchgefördert wird, wie dies in Fig. 7 in Seitenansicht und in den Fig. 8 und 9 in Draufsicht gezeigt ist. Das Trägermaterial (vgl. Fig. 8) ist dabei zumeist Teil eines Endlosbogens 420 (vgl. Fig. 7).

Der Radius der Andruckwalze 400 ist so gewählt, dass die Auflagefläche 410 der Andruckwalze 400 auf dem Trägermaterial 10 die Enden 27, 28 der offenen Antennenspule 20 gleichzeitig kontaktiert, wie dies in Fig. 8 und 9 angedeutet ist.

Die Andruckwalze 400 ist üblicherweise aus Kunststoff gefertigt. In einem begrenzten Bereich, in welchem die Enden 27, 28 der offenen Antennenspule 20 unter der Walze 400 hindurchgefördert werden, weist die Andruckwalze einen elektrisch leitfähigen Bereich 450 auf, der restliche Teil 440 der Walze 400 ist somit in der Regel elektrisch nicht leitfähig (vgl. Fig. 9). Der leitfähige Bereich 450 kann beispielsweise mittels einer die Walze 400 umlaufenden Metallfolie gebildet werden.

Wenn allerdings der elektrisch leitfähige Bereich 450 aus Vollmaterial oder, wie beschrieben, einer durchgehend leitfähigen Oberfläche, beispielsweise einer umlaufenden Metallfolie, gebildet wird, so besteht die Gefahr, dass in der leitfähigen Oberfläche Wirbelströme entstehen, die auf das Messobjekt, d.h. die zu prüfende Antennenspule 20, zurückwirken und das Messergebnis die Funktionsfähigkeit der Antennenspule betreffend in meist nicht reproduzierbarer Weise verfälschen.

Vorzugsweise wird daher, wie in Fig. 10 illustriert, der leitfähige Bereich 450 derart gestaltet, dass sich parallel zu der Walzenachse angeordnete leitfähige Segmente mit nicht leitfähigen Segmenten abwechseln. Vorzugsweise sind die leitfähigen Elemente lediglich an deren Oberfläche leitfähig. Die jeweiligen Segmente sind, wie erwähnt, koaxial, vorzugsweise in Form von Streifen, auf der Walzenoberfläche angeordnet. Leitfähige Streifen 450, beispielsweise aus Metallfolie, wechseln sich dabei mit nicht leitfähigen Streifen 451 ab. Auf diese Weise können Wirbelströme effizient unterbunden werden.

Die Breite der Streifen 450 wird dabei so gewählt, dass beim Durchlaufen des Bogens 420 stets ein leitfähiger Streifen im Bereich der zu überbrückenden offenen Enden 27, 28 der Antennenspule 20 zu liegen kommt und diese überbrückt. Zu diesem Zeitpunkt kann der Schritt des kontaktlosen Prüfens der geschlossenen Antennenspule 20 durchgeführt werden.

Wie vorstehend erwähnt, kann der Schritt des kontaktlosen Prüfens der geschlossenen Antennenspule 20 in Rahmen des erfindungsgemäßen Verfahrens mit bekannten, kontaktlosen Prüfverfahren durchgeführt werden. Diese weisen allerdings, wie in der Beschreibungseinleitung bereits angegeben, zahlreiche Mängel auf, insbesondere sind diese Verfahren technisch sehr aufwendig. Im Folgenden wird ein neues, kontaktloses Prüfverfahren allgemein vorgestellt, welches vorteilhaft im Schritt des kontaktlosen Prüfens der geschlossenen Antennenspule 20 eingesetzt werden kann. Dieses Verfahren, welches grundsätzlich darauf beruht, das Ausschwingverhalten einer angeregten Antennenspule 20, d.h. die durch einen Impuls erzeugte freie, gedämpfte Schwingung der Antennenspule 20, zu analysieren, kann in besonders einfacher Weise eine offene Antennenspule 20 von einer geschlossenen Antennenspule 20 unterscheiden, ist aber, wie nachstehend detailliert beschrieben, darauf nicht beschränkt. Die grundlegenden Schritte des Prüfverfahrens sind ein Anregen der zu prüfenden Antennenspule 20 zur Schwingung, ein Erfassen der freien, gedämpften Schwingung der Antennenspule in Antwort auf die Anregung sowie ein Auswerten der erfassten Schwingung.

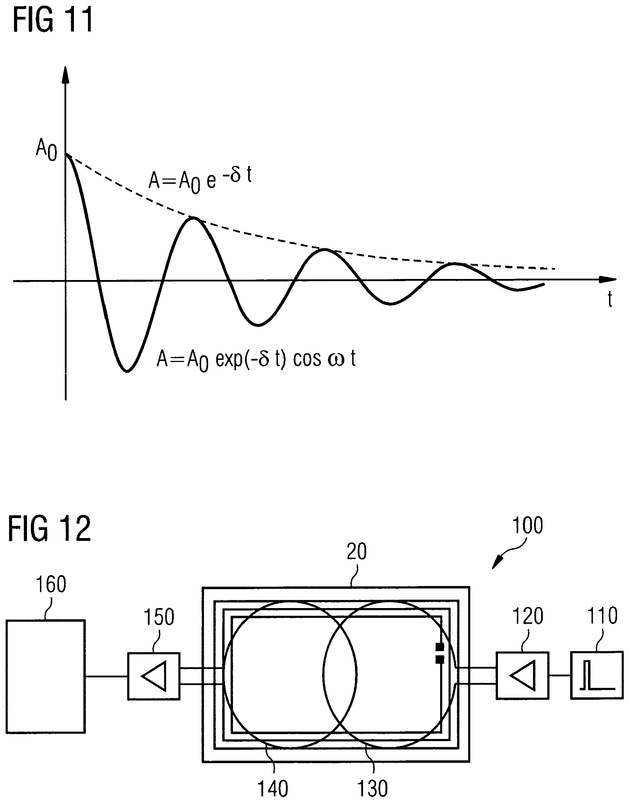

Fig. 11 zeigt den theoretischen Verlauf einer freien, gedämpften Schwingung A(t) im Verlauf der Zeit t. A(t) kann dabei dem Strom I oder der Spannung U entsprechen. Die Kreisfrequenz $\omega$ entspricht der Eigenresonanzfrequenz der entsprechenden Spule, aus dem Abklingkoeffizienten $\delta$ kann die Güte der Spule bestimmt werden.

Fig. 12 zeigt schematisch den Aufbau einer Prüfvorrichtung 100 zum Prüfen einer Antennenspule 20 mittels des neuen Prüfverfahrens. Die Vorrichtung 100 umfasst einen Impulsgeber 110 mit angeschlossenem Verstärker 120. Der Ausgang des Verstärkers 120 wird auf eine Erregerspule 130 gelegt, welche vorzugsweise lediglich eine Windung aufweist. Eine Messantenne 140 ist orthogonal zu der Erregerspule 130 angeordnet. An der Messantenne 140, welche vorzugsweise ebenso nur eine Spulenwindung besitzt, ist wiederum ein Verstärker 150 angeordnet, dessen Ausgang an eine Auswertungseinrichtung 160 angeschlossen ist.

Im Rahmen dieser Erfindung wird der Begriff der "orthogonalen" Anordnung zweier Spulen zueinander, hier der Erregerspule 130 und der Messantenne 140, so verwendet, dass die Anordnung der Erregerspule 130 zu der Messantenne 140 räumlich derart erfolgt, dass in der Messantenne 140 möglichst kein Signal der Erregerspule eingekoppelt wird. Wie vorstehend bereits erwähnt, ist dies genau dann der Fall, wenn das Ringintegral über den magnetischen Fluss $\Phi$ durch diese Spule größer als Null ist. Das Integral über den magnetischen Fluss $\Phi$ ist genau dann Null, wenn sich magnetische Feldlinien unterschiedlicher Richtung und Feldstärke in der Messantenne 140 über die Gesamtfläche gegenseitig aufheben, oder wenn der Winkel der Feldlinien zur Spulenachse genau 90° beträgt. Im gezeigten Beispiel sind die Erregerspule 130 und die Messantenne 140 koplanar "orthogonal" zueinander angeordnet, indem beide Spulen, wie dargestellt, teilweise übereinander liegen. Diese Anordnung kann weiter derart abgestimmt werden, dass das Integral über den magnetischen Fluss, wie gewünscht, Null ergibt. Dies folgt daraus, dass die von der Erregerspule 130 erzeugten magnetischen Feldlinien innerhalb und außerhalb der Erregerspule 130 in jeweils unterschiedliche Richtungen verlaufen. Der Grad der Überlappung der Erregerspule 130 und der Messantenne 140 wird nun so gewählt, dass sich diese Feldlinien in der Innenfläche der Messantenne 140 genau aufheben.

Wie leicht nachvollziehbar, erleichtert eine orthogonale Anordnung der Erregerspule 130 zur Messantenne 140 das Erfassen des Ausschwingens der zu prüfenden Antennenspule 20.

Die Messantenne 140 ist bevorzugt so ausgelegt, dass sie eine möglichst geringe Güte aufweist und dass die Eingangskapazität eines gegebenenfalls über ein (Koaxial)-Kabel angeschlossenen Verstärkers 150 möglichst nicht wirksam werden kann, da die Messantenne 140 ansonsten eine starke Eigenschwingung in die Messung einbringen würde. Dies würde die Messung, d.h. das Erfassen der freien gedämpften Schwingung der zu prüfenden Antennenspule 20, beeinträchtigen. Insbesondere müsste die Eigenschwingung stets herausgerechnet werden. Die Eigenresonanz der Messantenne 140 lässt sich durch Anwendung einer (nicht gezeigten) Kompensationsschaltung unterdrücken. Diese besteht aus einer Parallelschaltung einer Kapazität und eines Widerstandes, wobei diese Größen typischerweise im Bereich vom ca. 1 bis 50 pF bzw. 1 bis 10 MOhm liegen. Die Kompensationsschaltung liegt dabei in Reihe zu der Messantenne 140. Durch den hohen Reihenwiderstand geht die Güte der Messantenne 140 praktisch gegen Null. Dadurch wird die Eigenresonanz nicht mehr wirksam. Zur Berechnung dieser Kompensationsschaltung können beispielsweise die für die Berechnung der Kompensation für Oszilloskop-Tastköpfe bekannten Formeln verwendet werden.

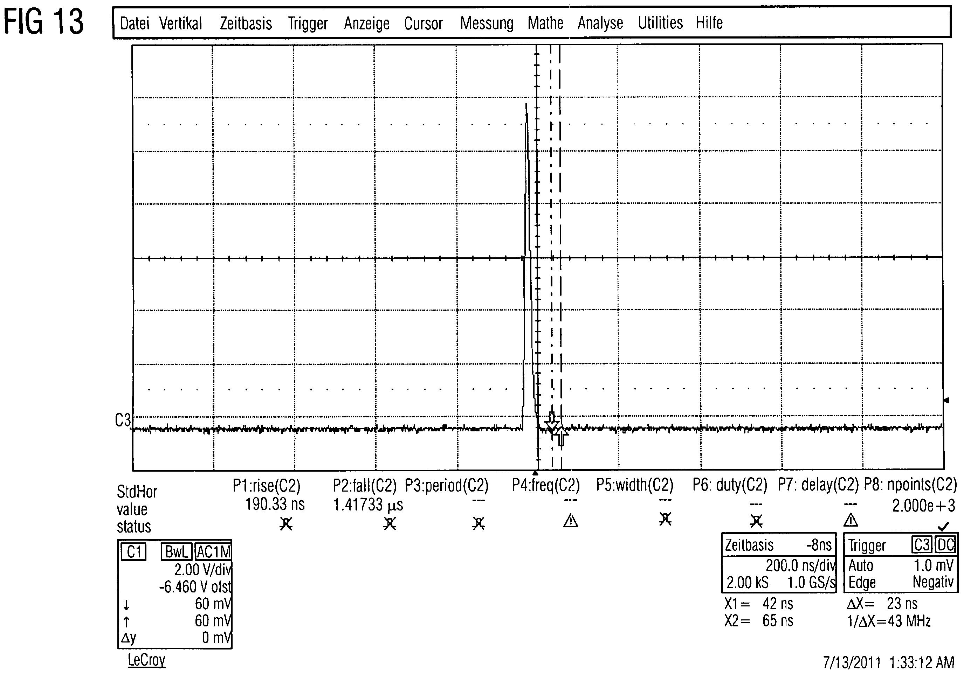

Gemäß einer ersten Ausführungsform des neuen Prüfverfahrens wird die Antennenspule durch einen Dirac-Impuls angeregt. Dazu wird der Impulsgeber 110 so eingestellt, dass er eine maximale Amplitude in kürzest möglicher Zeit erreicht wird. Es kann dabei beispielsweise eine Amplitude von 12 V mit einer Breite von nur 29 ns erreicht werden. In Fig. 13 ist ein entsprechender Signalverlauf angegeben.

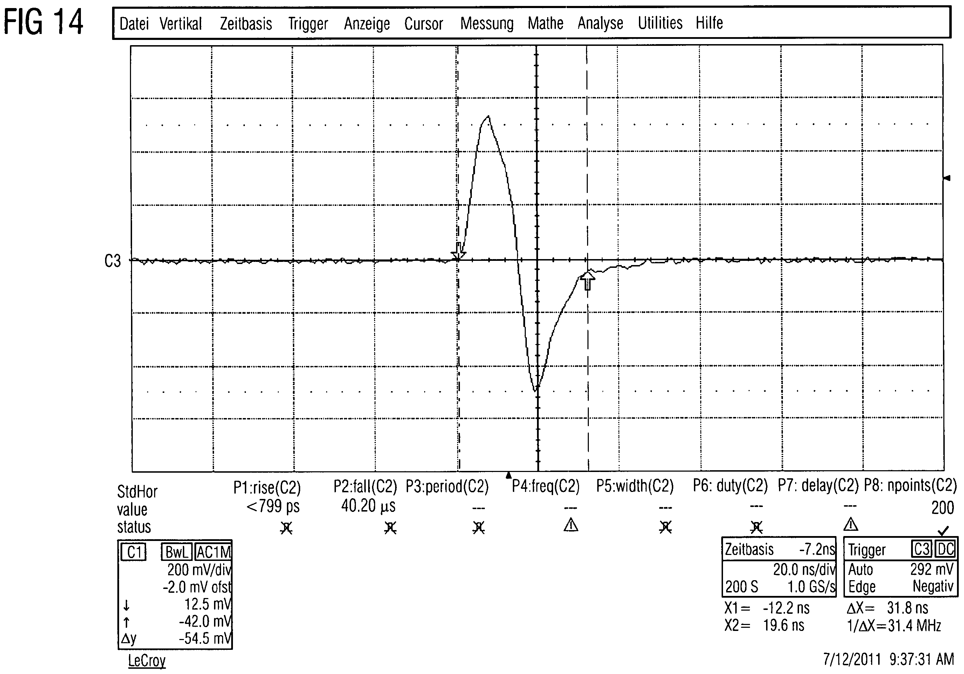

Wird nun der Impulsgeber 110 an die Erregerspule 130 angeschlossen, so ergibt sich - ohne Anordnung der Antennenspule 20 - durch die im dadurch entstehenden magnetischen Feld entstehende Energie ein von der Messantenne 140 erfasster Signalverlauf mit nachfolgender Ausschwingzeit, wie er in Fig. 14 illustriert ist.

Wird nun eine zu prüfende Antennenspule 20 direkt unter der Erregerspule 130 angeordnet, so wird die Antennenspule durch den positiven Dirac-Impuls des Impulsgebers 110 zu einer freien, gedämpften Schwingung angeregt. Aus dem resultierenden typischen Ausschwingen der Antennenspule 20 können die Eigenresonanzfrequenz der Antennenspule 20 sowie deren Güte ermittelt werden. Weist die Antennenspule 20 einen Fertigungsfehler auf, beispielsweise einen Leiterbahnbruch oder einen Kurzschluss zwischen einzelnen Spulenwindungen, so führt dies, wie nachfolgend illustriert, zu einem signifikant abweichenden Signalverlauf der "Nachschwingung", d.h. der entsprechenden freien, gedämpften Schwingung der beschädigten Antennenspule. Insbesondere Eigenresonanzfrequenz und/oder Güte einer solchen Spule unterscheiden sich deutlich erkennbar von den entsprechenden Werten einer intakten Antennenspule.

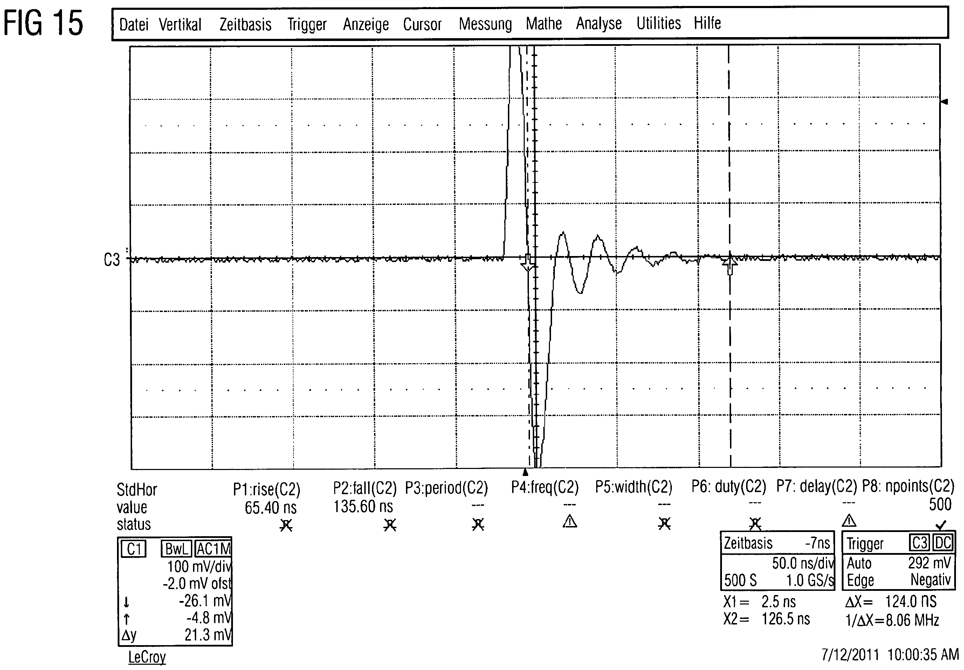

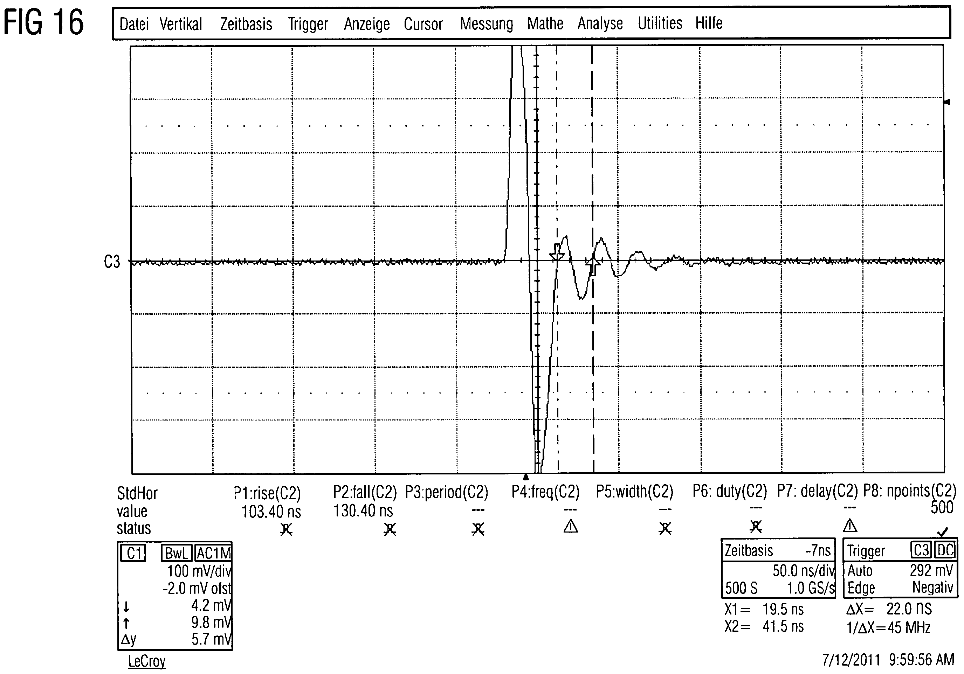

In Fig. 15 ist der Signalverlauf einer freien, gedämpften Schwingung einer intakten, offenen Antennenspule 20 dargestellt. In Fig. 16 ist mittels der Pfeile in der Figur angedeutet, wie anhand des erfassten Signalverlaufs die Eigenresonanz der geprüften Spule bestimmt werden kann. Die den Messergebnissen in Fig. 15 zu Grunde liegende offene Antennenspule ohne Chip besitzt beispielsweise eine Eigenresonanzfrequenz von ca. 45 MHz.

Ein Transponder, d.h. eine Antennenspule mit angeschlossenem integrierten Schaltkreis, besitzt in der Regel eine Eigenresonanzfrequenz in der Größenordnung der Sendefrequenz eines zugehörigen Lesegeräts. Kontaktlose Chipkarten gemäß ISO/IEC 14443 sind bei einer vorgegebenen Lesefrequenz von 13,56 MHz meist im Bereich von 15 bis 17 MHz abgestimmt.

Eine Antennenspule ohne angeschlossenen integrierten Schaltkreis auf einem entsprechenden Trägermaterial bildet zusammen mit den zwischen den Windungen auftretenden parasitären Kapazitäten ebenfalls einen Schwingkreis, zumeist mit einer Eigenresonanzfrequenz im Bereich von 30 bis 50 MHz, abhängig von der Dielektrizitätskonstante des Trägermaterials und der Windungsanzahl.

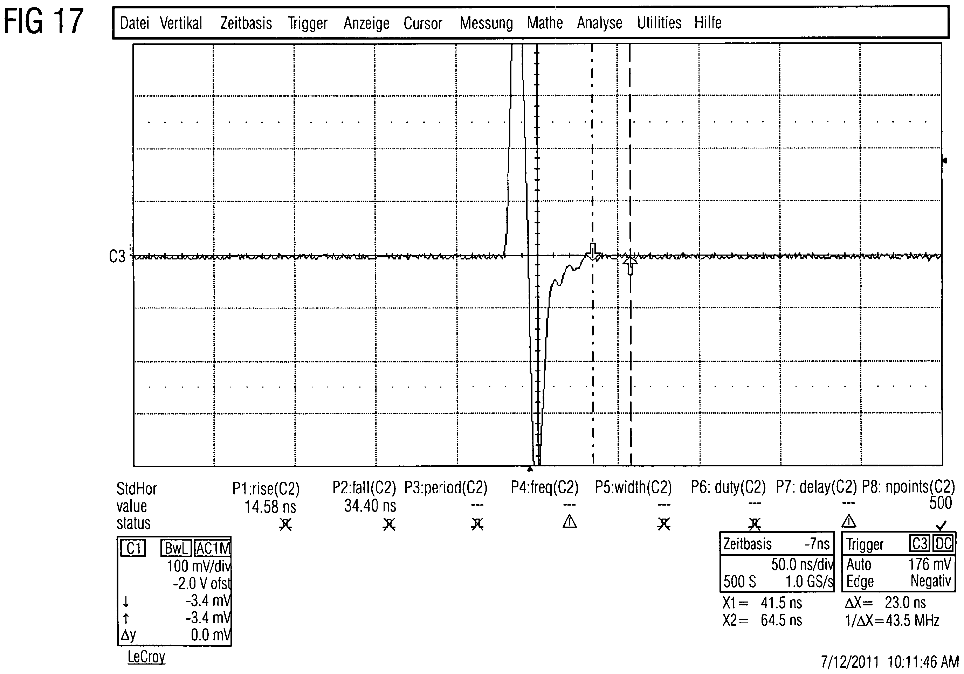

In Fig. 17 ist der Signalverlauf einer freien, gedämpften Schwingung einer Antennenspule 20 gezeigt, welche einen Leiterbahnbruch aufweist. Die Eigenresonanzfrequenz der Spule, d.h. der unterbrochenen Spulenteilstücke, ist noch erkennbar. Diese sind im Vergleich zur intakten Spule (vgl. Fig. 15, Fig. 16) deutlich erhöht.

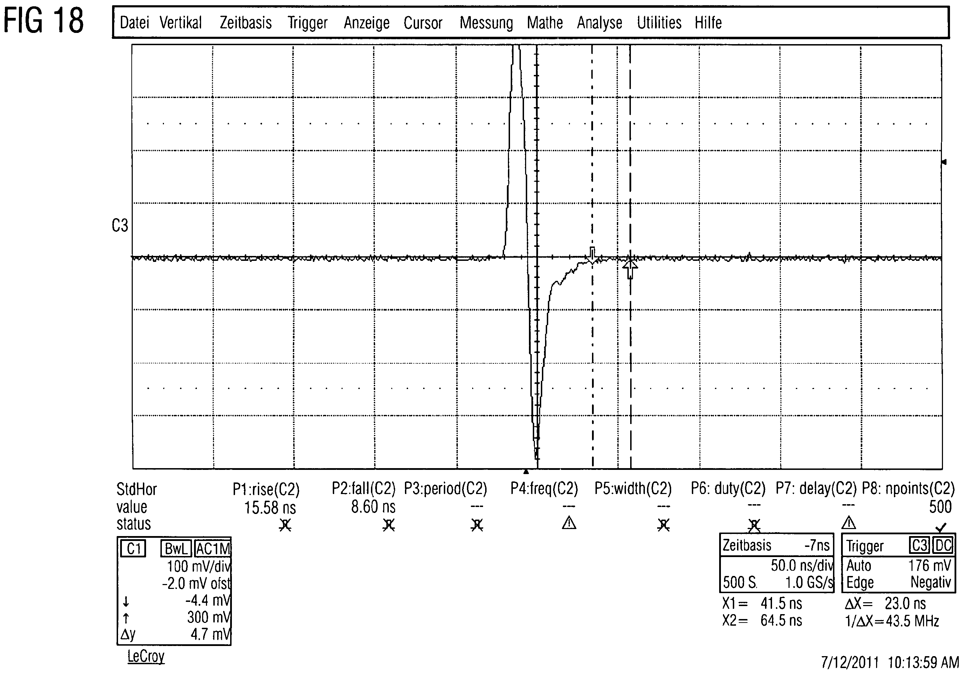

Wie mit Bezug auf Fig. 18 zu sehen, ist im Falle eines Kurzschlusses von Spulenwindungen der Antennenspule 20 kaum mehr ein Ausschwingen der Spule zu erkennen.

D.h. die beiden hauptsächlich auftretenden Fehler einer zu prüfenden Antennenspule 20, ein Leiterbahnbruch oder ein Kurzschluss zwischen Spulenwindungen, können durch Erfassen und Auswerten einer in Folge der Anregung der Spule 20 durch einen Impuls auftretenden freien, gedämpften Schwingung der Antennenspule zuverlässig erkannt werden.

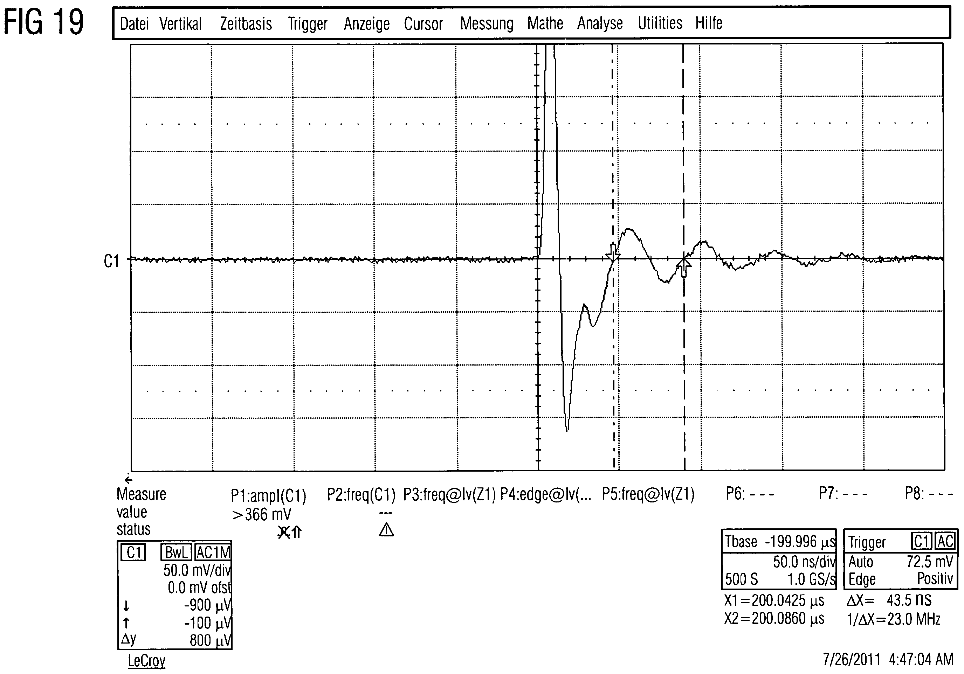

Mit Bezug auf die Figuren 19 bis 22 wird abschließend die Anwendung des neuen kontaktlosen Prüfverfahrens im Schritt des kontaktlosen Prüfens einer geschlossenen Antennenspule 20 im Rahmen des erfindungsgemäßen Prüfverfahrens illustriert.

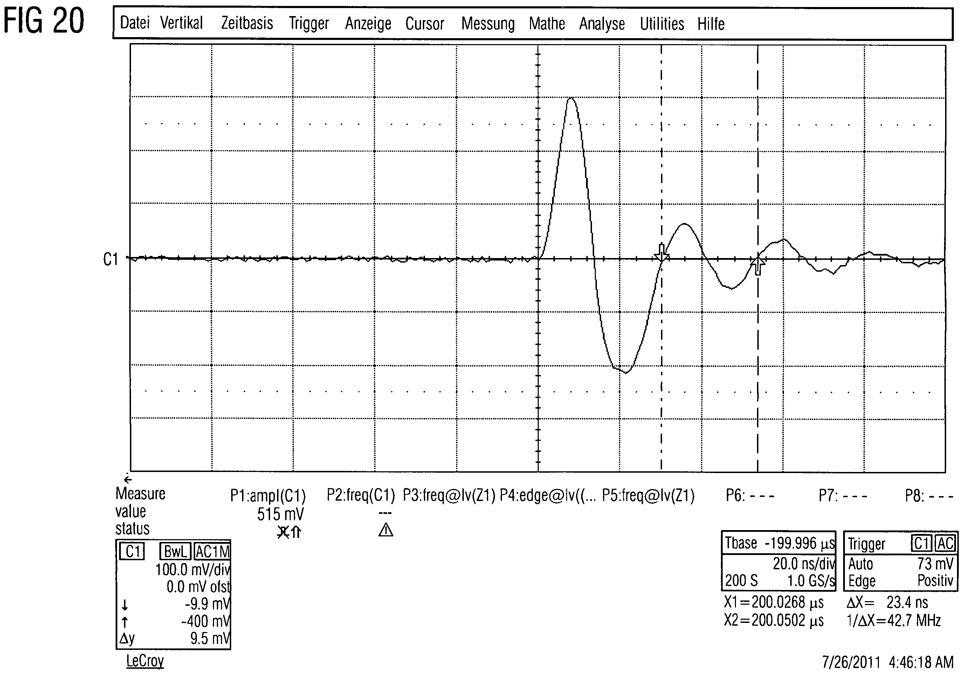

Die Fig. 19 und 20 zeigen das Ausschwingverhalten einer unbestückten Antennenspule 20, d.h. einer offenen Antennenspule 20 ohne angeschlossenen integrierten Schaltkreis 30 in Antwort auf die Anregung durch einen Dirac-Impuls. Je nach Antennenaufbau ist die Eigenresonanzfrequenz unterschiedlich hoch. Bei einer Spule mit zweilagigem Aufbau (entsprechend der Messung in Fig. 19) liegt die Eigenresonanzfrequenz bei ca. 23 MHz, bei einlagigem Aufbau (vgl. Fig. 20), bei ca. 43 MHz.

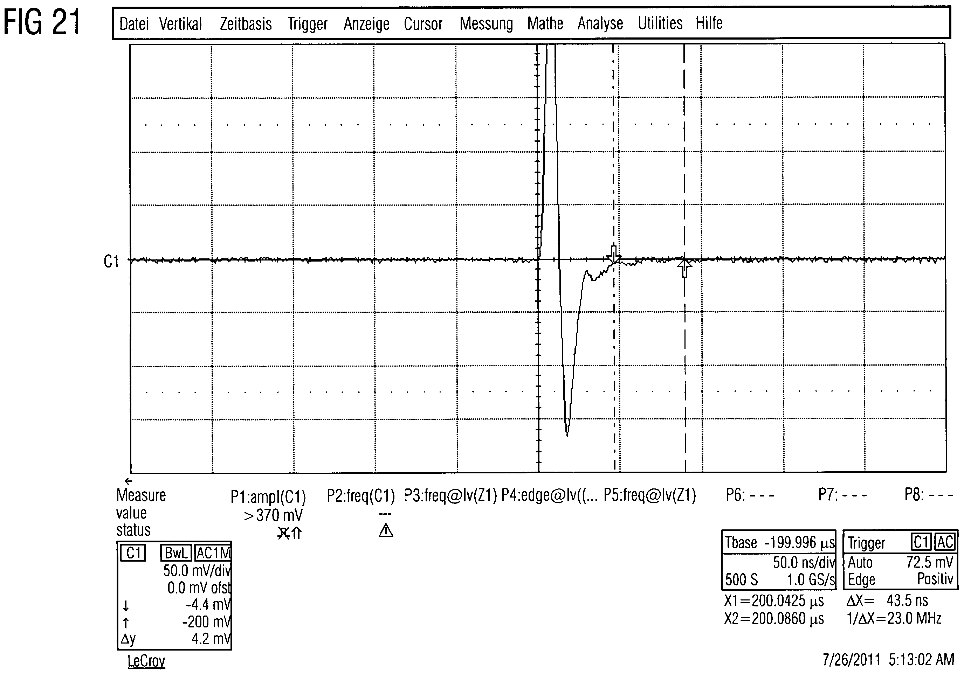

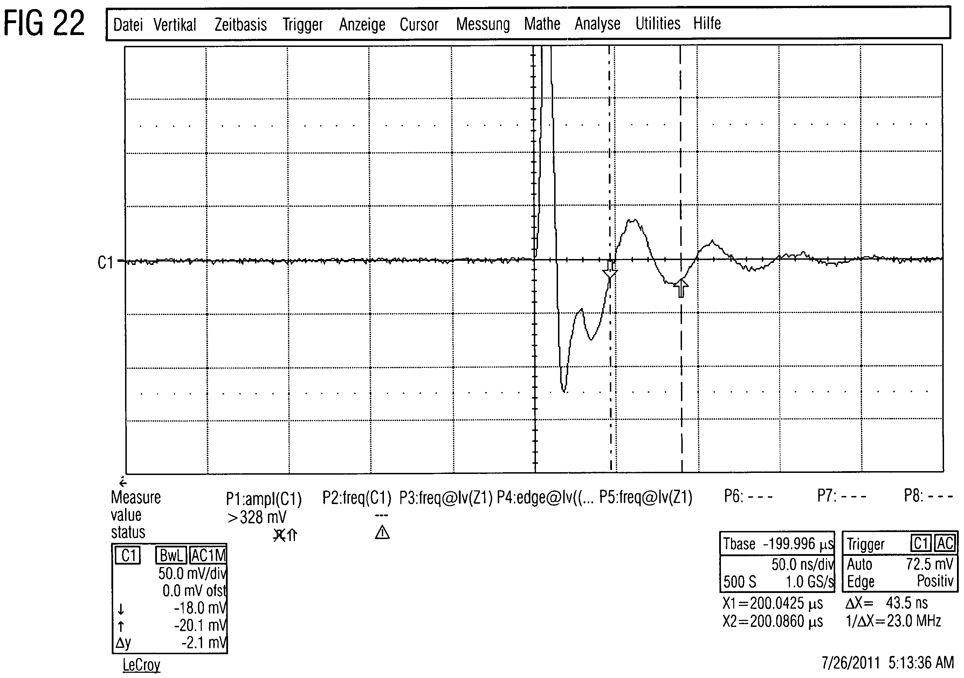

In den Fig. 21 und 22 sind nun Messergebnisse für die Fälle dargestellt, dass die offene Antennenspule 20, deren Ausschwingverhalten in Fig. 19 dargestellt worden ist, in vorstehend beschriebener Weise durch Anordnen einer die offenen Enden der Antennenspule überbrückenden Kurzschlussbrücke vor der kontaktlosen Prüfung mittels des neuen Verfahrens zu einer geschlossenen Antennenspule umgebildet worden ist.

Der in Fig. 21 gezeigte Signalverlauf zeigt praktisch kein Ausschwingen mehr. Dieses wird, wie beschrieben, durch das Überbrücken der offenen Spule im Wesentlichen verhindert. Hieraus kann geschlossen werden, dass die geprüfte Antennenspule keinen Leiterbahnbruch aufweist, auch nicht nahe einem der Enden der ursprünglich offenen Antennenspule 20.

In Fig. 22 hingegen ist weiterhin im Wesentlichen das gleiche Ausschwingverhalten wie in Fig. 19 zu erkennen. Dies bedeutet, dass die geprüfte Antennenspule immer noch offen ist. Da die bekannte Öffnung zwischen den Enden durch die Überbrückung geschlossen worden ist, muss ein Leiterbahnbruch an einer anderen Stelle der Antennenspule vorliegen.

**Patentansprüche**

1. Verfahren zum Prüfen der Funktionsfähigkeit einer Antennenspule (20) für einen kontaktlos kommunizierenden portablen Datenträger, umfassend die Schritte:

   - kontaktloses Prüfen der Funktionsfähigkeit einer geschlossenen Antennenspule (20);
   - anschließendes Unterbrechen einer Leiterbahn der Antennenspule (20) zur Herstellung einer offenen Antennenspule (20), bevor die Antennenspule (20) mit Komponenten eines integrierten Schaltkreises (30), insbesondere einem Chip, verbunden wird,

   **dadurch gekennzeichnet, dass** der Schritt des Prüfens der Funktionsfähigkeit der geschlossenen Antennenspule (20) folgende Teilschritte umfasst:

   - bei Vorliegen einer zunächst offenen Antennenspule (20):

     - Überbrücken der Enden der offenen Antennenspule (20) zur Herstellung der geschlossenen Antennenspule (20);

   - induktives Anregen der geschlossenen Antennenspule (20) zur Schwingung durch ein gepulstes Magnetfeld, welches vorzugsweise durch einen einzelnen Gleichstrompuls erzeugt wird;
   - Erfassen der freien, gedämpften Schwingung der geschlossenen Antennenspule (20) in Antwort auf die Anregung;
   - Auswerten der freien gedämpften Schwingung der geschlossenen Antennenspule (20).

2. Verfahren nach Anspruch 1, **dadurch gekennzeichnet, dass** der Gleichstrompuls als Dirac-Stoß erzeugt wird oder als ein Strompuls, welcher lediglich eine steile Flanke aufweist.

3. Verfahren nach einem der Ansprüche 1 oder 2, **dadurch gekennzeichnet, dass** die Antennenspule (20) zunächst geschlossen vorliegt, wobei die im Schritt des Unterbrechens entstehenden Enden (27, 28) einer Leiterbahn der dann offenen Antennenspule (20) als Anschlusskontakte für Komponenten des integrierten Schaltkreises (30) dienen.

4. Verfahren nach einem der Ansprüche 1 oder 2, **dadurch gekennzeichnet, dass** die Antennenspule (20) zunächst offen vorliegt und die Enden (27, 28) der offenen Antennenspule (20) vor dem Schritt des kontaktlosen Prüfens zunächst dadurch überbrückt werden, dass eine diese Enden (27, 28) verbindende, leitfähige Kurzschlussbrücke (35) auf ein die Antennenspule (20) umfassendes Trägermaterial (10) aufgebracht, vorzugsweise aufgedruckt, wird.

5. Verfahren nach einem der Ansprüche 1 oder 2, **dadurch gekennzeichnet, dass** die Antennenspule (20) zunächst offen vorliegt und die Enden (27, 28) der offenen Antennenspule (20) vor dem Schritt des kontaktlosen Prüfens zunächst temporär mittels einer externen Überbrückungsvorrichtung (400), vorzugsweise in Form einer Walze, überbrückt werden.

6. Verfahren nach einem der Schritte 1 bis 5, **gekennzeichnet durch** den weiteren Schritt:

   - kontaktloses Prüfen der Funktionsfähigkeit der offenen Antennenspule (20) nach dem Schritt des Unterbrechens, wobei der Schritt des Unterbrechens folgende Teilschritte umfasst:
   - Anregen der Antennenspule (20) zur Schwingung;
   - Erfassen der freien, gedämpften Schwingung der Antennenspule (20) in Antwort auf die Anregung;
   - Auswerten der freien gedämpften Schwingung der Antennenspule (20).

**Claims**

1. A method for checking the functionality of an antenna coil (20) for a contactlessly communicating portable data carrier, comprising the steps of:

- contactlessly checking the functionality of a closed antenna coil (20);
- subsequently interrupting a conductor path of the antenna coil (20) for producing an open antenna coil (20), prior to the connection of the antenna coil (20) with components of an integrated circuit (30), in particular with a chip,

**characterized in that** the step of checking the functionality of the closed antenna coil (20) comprises the following steps:

- if a, first, open antenna coil (20) is present:

- bridging the ends of the open antenna coil (20) for producing the closed antenna coil (20);

- inductively exciting the closed antenna coil (20) into oscillation by a pulsed magnetic field, which is preferably generated by one single direct-current pulse;
- detecting the free, damped oscillation of the closed antenna coil (20) in response to the excitation;
- evaluating the free damped oscillation of the closed antenna coil (20).

2. The method according to claim 1, **characterized in that** the direct-current pulse is generated as a Dirac pulse or as a current pulse having only one steep edge.

3. The method according to either of claims 1 or 2, **characterized in that** the antenna coil (20) is first present in a closed fashion, the ends (27, 28) of a conductor path of the then open antenna coil (20), which result from the step of interrupting, serving as connection contacts for components of the integrated circuit (30).

4. The method according to either of claims 1 or 2, **characterized in that** the antenna coil (20) is first present in an open fashion, and prior to the step of contactlessly checking, the ends (27, 28) of the open antenna coil (20) are first bridged **in that** a conductive shorting bridge (35) connecting these ends (27, 28) is applied, preferably printed, onto a carrier material (10) comprising the antenna coil (20).

5. The method according to either of claims 1 or 2, **characterized in that** the antenna coil (20) is first present in an open fashion, and prior to the step of contactlessly checking, the ends (27, 28) of the open antenna coil (20) are first temporarily bridged by means of an external bridging device (400), preferably in the form of a roll.

6. The method according to any of claims 1 to 5, **characterized by** the further step of:

- contactlessly checking the functionality of the open antenna coil (20) after the step of interrupting, the step of interrupting comprising the following steps:
- exciting the antenna coil (20) into oscillation;
- detecting the free, damped oscillation of the antenna coil (20) in response to the excitation;
- evaluating the free damped oscillation of the antenna coil (20).

**Revendications**

1. Procédé de vérification de la capacité de fonctionnement d'une bobine d'antenne (20) pour un support de données portable communiquant sans contact, comprenant les étapes :

- vérification sans contact de la capacité de fonctionnement d'une bobine d'antenne (20) fermée ;
- à la suite de cela, interruption d'une piste conductrice de la bobine d'antenne (20) afin de générer une bobine d'antenne (20) ouverte avant que la bobine d'antenne (20) soit reliée à des composants d'un circuit intégré (30), en particulier avec une puce,

**caractérisé en ce que** l'étape de la vérification de la capacité de fonctionnement d'une bobine d'antenne (20) fermée comprend les étapes partielles suivantes :

- en présence d'une bobine d'antenne (20) tout d'abord ouverte

- pontage des extrémités de la bobine d'antenne (20) ouverte, pour générer la bobine d'antenne (20) fermée ;

- excitation inductive de la bobine d'antenne (20) fermée, pour obtenir une oscillation par un champ magnétique pulsé, lequel est de préférence engendré par une pulsion individuelle de courant continu ;
- saisie de l'oscillation libre amortie de la bobine d'antenne (20) fermée en réponse à l'excitation ;
- évaluation de l'oscillation libre amortie de la bobine d'antenne (20) fermée.

2. Procédé selon la revendication 1, **caractérisé en ce que** la pulsion de courant continu est engendrée sous forme d'impulsion de Dirac ou d'une pulsion de courant qui présente seulement un flanc raide.

3.  Procédé selon une des revendications 1 ou 2, **caractérisé en ce que** la bobine d'antenne (20) se trouve tout d'abord fermée, cependant que les extrémités (27, 28) d'une piste conductrice générées à l'étape de l'interruption servent de contacts de raccordement à la bobine d'antenne (20) alors ouverte, pour des composants du circuit intégré (30).

4.  Procédé selon une des revendications 1 ou 2, **caractérisé en ce que** la bobine d'antenne (20) se trouve tout d'abord ouverte et que les extrémités (27, 28) de la bobine d'antenne (20) ouverte sont, avant l'étape de la vérification sans contact, tout d'abord pontées, ce qui a lieu **en ce qu'**un pont de court-circuit (35) conducteur reliant ces extrémités (27, 28) est appliqué, de préférence imprimé, sur un matériau support (10) comprenant la bobine d'antenne (20).

5.  Procédé selon une des revendications 1 ou 2, **caractérisé en ce que** la bobine d'antenne (20) se trouve tout d'abord ouverte et que les extrémités (27, 28) de la bobine d'antenne (20) ouverte sont, avant l'étape de la vérification sans contact, tout d'abord pontées temporairement au moyen d'un dispositif de pontage (400) externe, de préférence sous forme d'un rouleau.

6.  Procédé selon une des étapes de 1 à 5, **caractérisé par** l'étape additionnelle :

    - vérification sans contact de la capacité de fonctionnement de la bobine d'antenne (20) ouverte, après l'étape de l'interruption, cependant que l'étape de l'interruption comprend les étapes partielles suivantes :
    - excitation de la bobine d'antenne (20) pour obtenir une oscillation ;
    - saisie de l'oscillation libre amortie de la bobine d'antenne (20) en réponse à l'excitation ;
    - évaluation de l'oscillation libre amortie de la bobine d'antenne (20).

## FIG 1

## FIG 2

## FIG 3

## FIG 4

51

20

10

## FIG 5

35

27 28

20

10

## FIG 6

40

20

10

## FIG 7

+    400

420

410

## FIG 8

100

400

410    27    430

28    20

130

10

140

# FIG 9

# FIG 10

## FIG 11

$A = A_0 e^{-\delta t}$

$A = A_0 \exp(-\delta t) \cos \omega t$

## FIG 12

# FIG 13

EP 2 581 984 B1

FIG 14

C3

EP 2 581 984 B1

| | StdHor | P1:rise(C2) | P2:fall(C2) | P3:period(C2) | P4:freq(C2) | P5:width(C2) | P6: duty(C2) | P7: delay(C2) | P8: npoints(C2) |
|---|---|---|---|---|---|---|---|---|---|
| | value | <799 ps | 40.20 μs | --- | | --- | --- | --- | 200 |
| | status | ✗ | ✗ | ✗ | ⚠ | ✗ | ✗ | ⚠ | ✓ |

| C1 | BwL AC1M |
|---|---|
| | 200 mV/div |
| | -2.0 mV ofst |
| ↓ | 12.5 mV |
| ↑ | -42.0 mV |
| Δy | -54.5 mV |

LeCroy

| Zeitbasis | -7.2ns | Trigger | C3 DC |
|---|---|---|---|
| | 20.0 ns/div | Auto | 292 mV |
| 200 S | 1.0 GS/s | Edge | Negativ |

X1= -12.2 ns    ΔX= 31.8 ns
X2= 19.6 ns     1/ΔX=31.4 MHz

7/12/2011 9:37:31 AM

# FIG 15

| Datei | Vertikal | Zeitbasis | Trigger | Anzeige | Cursor | Messung | Mathe | Analyse | Utilities | Hilfe |

StdHor
value
status

| P1:rise(C2) | P2:fall(C2) | P3:period(C2) | P4:freq(C2) | P5:width(C2) | P6: duty(C2) | P7: delay(C2) | P8: npoints(C2) |
|---|---|---|---|---|---|---|---|
| 65.40 ns | 135.60 ns | --- | --- | --- | --- | --- | 500 |

| C1 | BwL | AC1M |
| 100 mV/div |
| -2.0 mV ofst |
| ↓ | -26.1 mV |
| ↑ | -4.8 mV |
| Δy | 21.3 mV |

LeCroy

| Zeitbasis | -7ns | Trigger | C3 DC |
| | 50.0 ns/div | Auto | 292 mV |
| 500 S | 1.0 GS/s | Edge | Negativ |

X1= 2.5 ns    ΔX= 124.0 ns
X2= 126.5 ns   1/ΔX=8.06 MHz

7/12/2011 10:00:35 AM

FIG 16

Datei  Vertikal  Zeitbasis  Trigger  Anzeige  Cursor  Messung  Mathe  Analyse  Utilities  Hilfe

C3

| StdHor | P1:rise(C2) | P2:fall(C2) | P3:period(C2) | P4:freq(C2) | P5:width(C2) | P6: duty(C2) | P7: delay(C2) | P8: npoints(C2) |
|--------|-------------|-------------|---------------|-------------|--------------|--------------|---------------|-----------------|
| value | 103.40 ns | 130.40 ns | --- | --- | --- | --- | --- | 500 |
| status | ✗ | ✗ | ✗ | ⚠ | ✗ | ✗ | ⚠ | ✓ |

| C1 | BwL | AC1M |
|----|-----|------|
| | | 100 mV/div |
| | | -2.0 mV ofst |
| ↓ | | 4.2 mV |
| ↑ | | 9.8 mV |
| Δy | | 5.7 mV |

LeCroy

| Zeitbasis | -7ns | Trigger | C3 DC |
|-----------|------|---------|-------|
| | 50.0 ns/div | Auto | 292 mV |
| 500 S | 1.0 GS/s | Edge | Negativ |
| X1 = 19.5 ns | | ΔX = 22.0 ns |
| X2 = 41.5 ns | | 1/ΔX = 45 MHz |

7/12/2011  9:59:56 AM

**FIG 17**

# FIG 18

StdHor
value
status

| | P1:rise(C2) | P2:fall(C2) | P3:period(C2) | P4:freq(C2) | P5:width(C2) | P6: duty(C2) | P7: delay(C2) | P8: npoints(C2) |
|---|---|---|---|---|---|---|---|---|
| | 15.58 ns | 8.60 ns | --- | --- | --- | --- | --- | 500 |
| | ✗ | ✗ | ✗ | ⚠ | ✗ | ✗ | ⚠ | ✓ |

| C1 | BwL | AC1M |
|---|---|---|
| | | 100 mV/div |
| | | -2.0 mV ofst |
| ↓ | | -4.4 mV |
| ↑ | | 300 mV |
| Δy | | 4.7 mV |

LeCroy

| Zeitbasis | -7ns | Trigger | C3 DC |
|---|---|---|---|
| | 50.0 ns/div | Auto | 176 mV |
| 500 S. | 1.0 GS/s | Edge | Negativ |

X1 = 41.5 ns   ΔX = 23.0 ns
X2 = 64.5 ns   1/ΔX=43.5 MHz

EP 2 581 984 B1

7/12/2011 10:13:59 AM

**FIG 19**

| Datei | Vertikal | Zeitbasis | Trigger | Anzeige | Cursor | Messung | Mathe | Analyse | Utilities | Hilfe |

Measure
value
status

| P1:ampl(C1) | P2:freq(C1) | P3:freq@lv(Z1) | P4:edge@lv(... | P5:freq@lv(Z1) | P6: - - - | P7: - - - | P8: - - - |
|---|---|---|---|---|---|---|---|
| >366 mV | --- | | | | | | |

| C1 | BwL | AC1M |
|---|---|---|
| | 50.0 mV/div | |
| | 0.0 mV ofst | |
| ↓ | -900 μV | |
| ↑ | -100 μV | |
| Δy | 800 μV | |

LeCroy

| Tbase -199.996 μs | Trigger | C1 AC |
|---|---|---|
| 50.0 ns/div | Auto | 72.5 mV |
| 500 S    1.0 GS/s | Edge | Positiv |

X1 = 200.0425 μs    ΔX=  43.5 ns
X2 = 200.0860 μs    1/ΔX=23.0 MHz

7/26/2011  4:47:04 AM

EP 2 581 984 B1

**FIG 20**

EP 2 581 984 B1

Datei  Vertikal  Zeitbasis  Trigger  Anzeige  Cursor  Messung  Mathe  Analyse  Utilities  Hilfe

C1

Measure
value
status

| | P1:ampl(C1) | P2:freq(C1) | P3:freq@lv(Z1) | P4:edge@lv((... | P5:freq@lv(Z1) | P6: - - - | P7: - - - | P8: - - - |
|---|---|---|---|---|---|---|---|---|
| | 515 mV | --- | | | | | | |
| | ⚡⇑ | ⚠ | | | | | | |

| C1 | BwL | AC1M |
|---|---|---|
| | 100.0 mV/div | |
| | 0.0 mV ofst | |
| ↓ | -9.9 mV | |
| ↑ | -400 mV | |
| Δy | 9.5 mV | |

LeCroy

| Tbase | -199.996 μs | Trigger | C1 AC |
|---|---|---|---|
| | 20.0 ns/div | Auto | 73 mV |
| 200 S | 1.0 GS/s | Edge | Positiv |

X1 = 200.0268 μs    ΔX= 23.4 ns
X2 = 200.0502 μs    1/ΔX=42.7 MHz

7/26/2011  4:46:18 AM

# FIG 21

FIG 22

| Datei | Vertikal | Zeitbasis | Trigger | Anzeige | Cursor | Messung | Mathe | Analyse | Utilities | Hilfe |

EP 2 581 984 B1

Measure
value
status

| P1:ampl(C1) | P2:freq(C1) | P3:freq@lv(Z1) | P4:edge@lv((... | P5:freq@lv(Z1) | P6: - - - | P7: - - - | P8: - - - |
| >328 mV | --- | | | | | | |

C1 | BwL | AC1M
50.0 mV/div
0.0 mV ofst
↓     -18.0 mV
↑     -20.1 mV
Δy    -2.1 mV

LeCroy

Tbase  -199.996 μs
50.0 ns/div
500 S        1.0 GS/s
X1=200.0425 μs
X2=200.0860 μs

Trigger    C1 AC
Auto        72.5 mV
Edge        Positiv
ΔX=   43.5 ns
1/ΔX=23.0 MHz

7/26/2011  5:13:36 AM

**IN DER BESCHREIBUNG AUFGEFÜHRTE DOKUMENTE**

**In der Beschreibung aufgeführte Patentdokumente**

*   DE 102011004674 A1

**In der Beschreibung aufgeführte Nicht-Patentliteratur**

*   **VON KLAUS FINKENZELLER.** RFID-Handbuch. Carl Hanser Verlag, 2008